# EUROPEAN PATENT SPECIFICATION

(11) **EP 0 888 043 B1**
(45) Date of publication and mention of the grant of the patent: **27.03.2002**
(21) Application number: 97912559.8
(22) Date of filing: 04.11.1997
(51) Int. Cl.: A01B 69/00

(54) **A SOIL WORKING IMPLEMENT**
BODENBEARBEITUNGSMASCHINE
MACHINE ARATOIRE

(30) Priority: 06.11.1996 NL 1004450
(43) Date of publication of application: 07.01.1999
(73) Proprietor: MAASLAND N.V., 3155 PD Maasland (NL)
(72) Inventor: VAN DER LELY, Cornelis, CH-6300 Zug (CH); VAN DER LELY, Ary, NL-3155 PD Maasland (NL)
(74) Representative: Corten, Maurice Jean F.M.
(86) International application number: NL9700606
(87) International publication number: WO9819514

(56) References cited:
- EP-A- 0 296 405
- EP-A- 0 578 325
- WO-A-84/02771
- WO-A-94/01812
- WO-A-95/29380
- DE-A- 4 318 798
- FR-A- 2 541 853
- US-A- 4 482 960
- US-A- 4 677 555
- US-A- 4 700 301
- PATENT ABSTRACTS OF JAPAN vol. 096, no. 010, 31 October 1996 & JP 08 166821 A (MURATA MACH LTD), 25 June 1996,

## Description

The present invention relates to a soil working implement comprising a vehicle including an agricultural implement connected thereto and a measuring system for determining the position of the vehicle according to the preamble of claim 1.

Such an implement is known from US-A-4,700,301.

The invention provides an alternative implement of the sort as defined above in which the vehicle is provided with a laser reflector and angle measuring means for determining the position of the laser reflector relative to the vertical, while this position can be passed to the rotatable laser-transceiver via the radiographic communication means for the purpose of correcting the position co-ordinates of the vehicle obtained by means thereof. This promotes a good function of the measuring system. However, it is also possible to provide the vehicle with a laser reflector which is arranged on a stabilized platform or is suspended in a cardan suspension system. In particular when a plough is connected to the vehicle, it may occur that the vehicle moves across the land in a tilted position, as a result of which also the laser reflector, if the latter is not stabilized, will come in a tilted position. This tilted position has to be taken into account when determining the position of the vehicle.

For the purpose of adapting the implement to any agricultural field, the measuring system comprises a computer having a memory, in which memory the outlines of a parcel to be worked can be recorded. Although it is possible beforehand to input the outlines of a parcel to be worked into the memory with the aid of maps, it is favourable when the outlines of a parcel to be worked are recorded in the memory by registering the position co-ordinates of the vehicle in the memory when the vehicle is moved across or along the outlines of the parcel. In other words, the farmer himself is able to record the outlines of the parcel to be worked in the computer by simply following them with the vehicle.

By having the vehicle move across a parcel whose outlines have been inputted into the computer memory and due to the combination of the measuring system and the radiographic communication means, it will be possible to design the vehicle as a self-propelled vehicle. Therefore, the vehicle can be unmanned and be controlled from a working accommodation where a computer including a monitor is arranged. From this accommodation the vehicle can then be controlled radiographically.

Although the vehicle is capable of being moved to and fro across the field to be worked, whilst turning on the headland, it is advantageous when the vehicle is provided on both sides with an equal agricultural implement by which the parcel is to be worked, one of these agricultural implements each time being in the inoperative position. In this manner, by means of a specific sidewardly backward or sidewardly forward movement in the direction determined by the computer, it will be possible to move the vehicle including the agricultural implements connected thereto to and fro across the field to be worked without turning.

From EP-A-0 578 325 a self-propelled, radiographic controlled vehicle, is known per se, using a type of position measuring system which differs from the one of the invention. This known vehicle has a plough on both sides, by which the parcel is to be worked, in which situation each time one of these ploughs is in the inoperative position. The known vehicle moves without turning but after a specific sidewardly backward or sidely forward movement.

For a better understanding of the invention, reference will now be made to the accompanying drawings, in which:
Figure 1 shows a random parcel on which the soil working implement according to the invention is schematically indicated;
Figure 2 shows the movement of an unmanned vehicle with on both sides a plough connected thereto across a parcel to be worked;
Figure 3 shows the tilted position of the vehicle in a furrow, and
Figure 4 shows an embodiment of a simple unmanned vehicle on both sides of which there is provided a plough having one share.

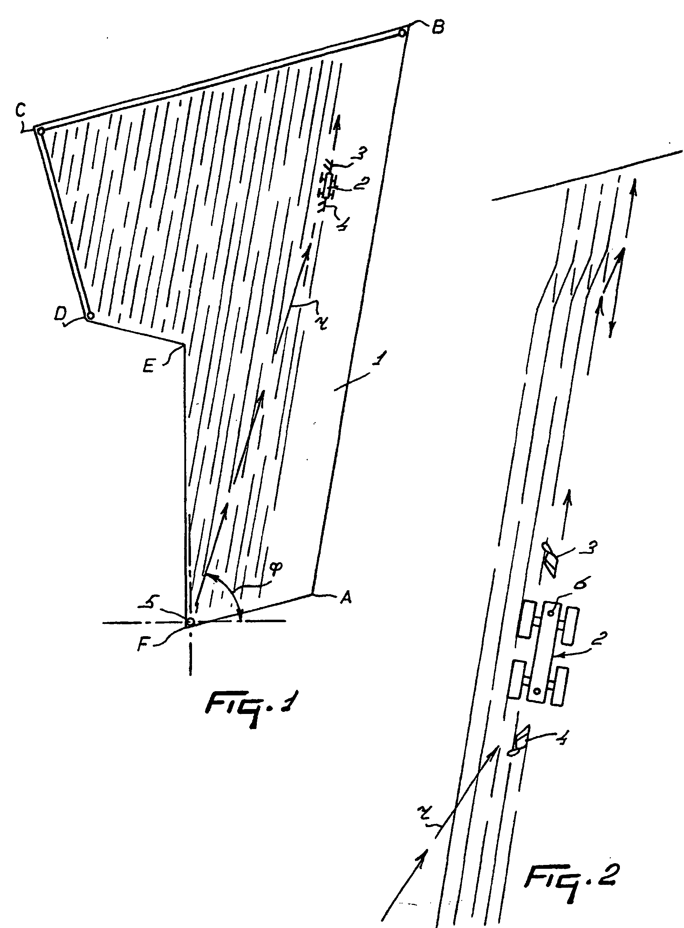

Figure 1 shows a random parcel 1 with a soil working implement indicated thereon, which implement includes a vehicle 2 with on both sides an agricultural implement, in particular a plough 3, 4 respectively, connected thereto. The implement furthermore comprises a measuring system for determining the position of the vehicle 2. To that end this measuring system comprises a laser-transceiver 5 rotatable about a vertical axis and provided with at least one reflector 6 that is disposed on the vehicle. By means of laser signals transmitted impulse-wise which, when reaching the vehicle 2, are reflected by said vehicle and received in the laser-transmitter/receiver, it is possible to determine the position of the vehicle in polar coordinates r, φ. On the basis of the difference in time between a laser impulse that is transmitted and a laser impulse that is subsequently reflected, it will be possible to determine the distance r, while the angle φ, at which the reflected signal reaches the laser-transceiver, applies as second polar coordinate relative to a reference direction. When the farmer follows the outlines of the parcel, e.g. from A to B and subsequently to C, D, E, F and back to A, with the vehicle 2 to which the agricultural implements 3, 4 may be connected or not, then, if during that drive each time the position coordinates r, φ of the vehicle 2 are determined, the outlines of the parcel 1 can be recorded and stored in the memory of a computer. This computer may be arranged in the working accommodation of the farmer. When the vehicle 2 is unmanned and is controlled radiographically, detection means may optionally be incorporated with regard to a possible transgression of the outlines of the parcel by the vehicle 2. Hence, in the embodiments represented in Figure 1, further laser-transceivers are arranged at a number of corners (B, C, D) of the parcel, the arrangement being such that these laser-transceivers are capable of transmitting a beam along the relevant outlines; therefore, said laser-transceivers are not rotatably arranged about an axis, but transmit the laser beam in a fixed direction. As soon as the vehicle touches the laser beam, there is obtained a reflection from this vehicle and there is detected that the vehicle has reached the boundary of the parcel, after which it may be stopped and, if required, its direction may be changed. In Figure 1 only three of such fixedly arranged laser-transceivers are indicated. It will be obvious that such laser-transceivers may be arranged as well at the other corners. Stopping the vehicle 2 or turning same is effected by radiographic control from the farm building where the computer system is arranged. When the outlines of the parcel to be worked have been inputted into the memory of the computer, it will be possible to determine in the computer the optimal direction of working. In Figure 1 this may be the direction parallel to the line A-B. When the unmanned vehicle including the two agricultural implements 3 and 4 is arranged near point A, the vehicle, after having been started radiographically, will be capable of moving in the direction of point B and performing along the way A-B an agricultural cultivation, in the present case by ploughing. When the vehicle including the agricultural implements approaches the line B-C, it is advantageous, instead of turning the vehicle 180°, to have the vehicle perform a sidewardly forward movement (see Figure 2), whereafter the vehicle will be able again to move parallel to the line A-B in the direction of the line A-F. When the vehicle has approached the line A-F, it will undergo a sidewardly backward movement and subsequently again move parallel to the line A-B in the direction of the line B-C. By thus driving to and fro while each time making a sideward movement, it will be possible to work the entire parcel.

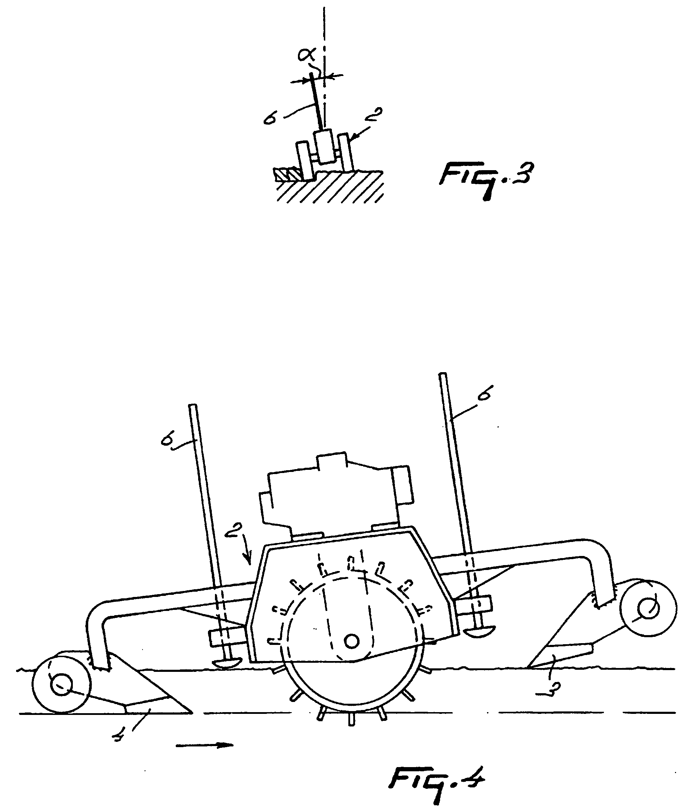

When a cultivation by ploughing is being executed, it may occur that the vehicle 2 moves with one of its wheels in the furrow and consequently takes a tilted position, as indicated in Figure 3. When the vehicle is in a tilted position, the reflector 6 disposed thereon will be in a tilted position as well and this will result in a measuring error in the distance r from the vehicle to the laser-transceiver 5. In order to correct this error, there have to be provided angle measuring means on the vehicle for determining the oblique angle α and to pass the size thereof radiographically to the computer in the working accommodation, so that the computer, when calculating the distance between the vehicle and the laser-transceiver, will be able to take the orientation of the vehicle into account. Figure 4 shows a simple unmanned vehicle 2 on both sides of which there is provided a plough 3, 4 respectively; these ploughs only have one share. The vehicle is provided with two reflection masts each having a reflector 6, which is advantageous in that at each measurement by the laser-transceiver the direction of travel of the vehicle can be determined at the same time. If the vehicle has only one reflector, a deviating direction of travel will only appear after a number of measurements, so after the vehicle has covered a certain distance in the wrong direction, and correction will be effected too late. For a simple vehicle as is shown in Figure 4, a relatively light diesel engine, e.g. one of 30 kW, is sufficient. The vehicle does not need a cabin; pneumatic tyres are not needed: two steel wheels having an antiskid construction are sufficient; a forward and backward control may be sufficient.

## Claims

1. A soil working implement comprising a vehicle (2) including an agricultural implement (3, 4) connected thereto and a measuring system for determining the position of the vehicle (2), the measuring system comprising a laser-transceiver (5) for determining the position of the vehicle (2), while there are furthermore provided radiographic communication means which are active between the measuring system and the vehicle (2), **characterized in that** the vehicle (2) is provided with a laser reflector (6) and angle measuring means for determining the position of the laser reflector (6) relative to the vertical, while said position can be passed to the rotatable laser-transceiver (5) via the radiographic communication means for the purpose of correcting the position co-ordinates of the vehicle (2) obtained by means thereof.

2. An implement as claimed in claim 1, **characterized in that** the vehicle (2) is provided with a laser reflector (6) which is arranged on a stabilized platform or is suspended in a cardan suspension system (6).

3. An implement as claimed in claim 1 or 2, **characterized in that** the computer is provided with a program for determining, on the basis of the outlines of the parcel (1) to be worked stored in the memory of the computer, the direction in which the parcel (1) should preferably be worked.

4. An implement as claimed in any one of the preceding claims, **characterized in that** the vehicle (2) is designed as a self-propelled vehicle.

5. An implement as claimed in claim 4, **characterized in that** the vehicle (2) is capable of being controlled radiographically.

6. An implement as claimed in claim 5, **characterized in that** the vehicle (2) is provided on both sides with an equal agricultural implement (3, 4) by which the parcel (1) is to be worked, in which situation each time one of these agricultural implements (3, 4) is in the inoperative position.

7. An implement as claimed in claim 6, **characterized in that** the vehicle (2) including the agricultural implements (3, 4) connected thereto is capable of being moved to and fro across the field to be worked in the direction determined by the computer without turning, but after a specific sidewardly backward or sidewardly forward movement.

8. An implement as claimed in any one of the preceding claims, **characterized in that** each of the agricultural implements (3, 4) is constituted by a plough.

## Patentansprüche

1. Bodenbearbeitungsvorrichtung, die ein Fahrzeug (2) mit einem daran angeschlossenen landwirtschaftlichen Gerät (3, 4) sowie ein Meßsystem zur Ermittlung der Position des Fahrzeuges (2) umfaßt, wobei das Meßsystem ein Laser-Sende-Empfangsgerät (5) zur Ermittlung der Position des Fahrzeuges (2) umfaßt, wobei ferner eine Funkeinrichtung vorhanden ist, die zwischen dem Meßsystem und dem Fahrzeug (2) wirksam ist,
**dadurch gekennzeichnet, daß** das Fahrzeug (2) mit einem Laser-Reflektor (6) und einer Winkelmeßvorrichtung versehen ist, um die Position des Laser-Reflektors (6) relativ zur Vertikalen zu ermitteln, wobei diese Position über die Funkeinrichtung an das drehbare Laser-Sende-Empfangsgerät (5) übermittelt werden kann, um die mit dessen Hilfe ermittelten Positionskoordinaten des Fahrzeuges (2) zu korrigieren.

2. Vorrichtung nach Anspruch 1,
**dadurch gekennzeichnet, daß** das Fahrzeug (2) mit einem Laser-Reflektor (6) versehen ist, der auf einer stabilisierten Plattform angeordnet oder in einem kardanischen Aufhängungssystem (6) aufgehängt ist.

3. Vorrichtung nach Anspruch 1 oder 2,
**dadurch gekennzeichnet, daß** der Computer mit einem Programm versehen ist, um auf der Basis der im Speicher des Computers gespeicherten Konturen der zu bearbeitenden Parzelle (1) die Richtung zu ermitteln, in der die Parzelle (1) vorzugsweise bearbeitet werden sollte.

4. Vorrichtung nach einem der vorhergehenden Ansprüche,
**dadurch gekennzeichnet, daß** das Fahrzeug (2) als Fahrzeug mit eigenem Antrieb ausgeführt ist.

5. Vorrichtung nach Anspruch 4,
**dadurch gekennzeichnet, daß** das Fahrzeug (2) funksteuerbar ist.

6. Vorrichtung nach Anspruch 5,
**dadurch gekennzeichnet, daß** das Fahrzeug (2) auf beiden Seiten mit demselben landwirtschaftlichen Gerät (3, 4) versehen ist, von dem die Parzelle (1) zu bearbeiten ist, wobei sich jeweils eines dieser landwirtschaftlichen Geräte (3, 4) in der Ruhelage befindet.

7. Vorrichtung nach Anspruch 6,
**dadurch gekennzeichnet, daß** das Fahrzeug (2) mit den daran angeschlossenen landwirtschaftlichen Geräten (3, 4) über das zu bearbeitende Feld in der von dem Computer bestimmten Richtung ohne Wenden, jedoch nach einer genau festgelegten, seitwärts nach hinten oder seitwärts nach vorn gerichteten Bewegung hin- und herbewegt werden kann.

8. Vorrichtung nach einem der vorhergehenden Ansprüche,
**dadurch gekennzeichnet, daß** jedes der landwirtschaftlichen Geräte (3, 4) durch einen Pflug gebildet ist.

## Revendications

1. Outil pour le travail de la terre comprenant un véhicule (2) comprenant un outil agricole (3, 4) qui y est relié et un système de mesure destiné à déterminer la position du véhicule (2), le système de mesure comprenant un émetteur-récepteur laser (5) destiné à déterminer la position du véhicule (2), tandis qu'il est en outre prévu des moyens de communication radiographiques qui sont actifs entre le système de mesure et le véhicule (2), **caractérisé en ce que** le véhicule (2) est équipé d'un réflecteur laser (6) et de moyens de mesure d'angle destinés à déterminer la position du réflecteur laser (6) par rapport à la verticale, tandis que ladite position peut être transmise à l'émetteur-récepteur laser rotatif (5) via les moyens de communication radiographiques dans le but de corriger les coordonnées de position du véhicule (2) obtenues au moyen de ceux-ci.

2. Outil selon la revendication 1, **caractérisé en ce que** le véhicule (2) est équipé d'un réflecteur laser (6) qui est disposé sur une plate-forme stabilisée ou est suspendu dans un système de suspension à cardan (6).

3. Outil selon la revendication 1 ou 2, **caractérisé en ce que** l'ordinateur est équipé d'un programme destiné à déterminer, en se basant sur les contours du terrain (1) devant être travaillé enregistrés dans la mémoire de l'ordinateur, la direction dans laquelle le terrain (1) doit être de préférence travaillé.

4. Outil selon l'une quelconque des revendications précédentes, **caractérisé en ce que** le véhicule (2) est conçu comme un véhicule automoteur.

5. Outil selon la revendication 4, **caractérisé en ce que** le véhicule (2) est capable d'être commandé de manière radiographique.

6. Outil selon la revendication 5, **caractérisé en ce que** le véhicule (2) est équipé sur les deux côtés d'un outil agricole identique (3, 4) au moyen duquel le terrain (1) doit être travaillé, situation dans laquelle l'un de ces deux outils agricoles (3, 4) se trouve à chaque fois dans une position d'arrêt.

7. Outil selon la revendication 6, **caractérisé en ce que** le véhicule (2) comprenant les outils agricoles (3, 4) qui y sont reliés est capable d'être déplacé en avant et en arrière à travers le terrain devant être travaillé dans la direction déterminée par l'ordinateur sans tourner, mais après un mouvement arrière latéral ou avant latéral spécifique.

8. Outil selon l'une quelconque des revendications précédentes, **caractérisé en ce que** chacun des outils agricoles (3, 4) est constitué d'une charrue.
